# EUROPEAN PATENT SPECIFICATION

(11) **EP 4 221 465 B1**
(45) Date of publication and mention of the grant of the patent: **05.11.2025**
(21) Application number: 22154142.8
(22) Date of filing: 31.01.2022
(51) Int. Cl.: H05B 45/3725, H05B 47/165

(54) **TOPOLOGY-INDEPENDENT SWITCHING REGULATOR CIRCUIT, SWITCH MODE DRIVER, AND LUMINAIRE**
TOPOLOGIEUNABHÄNGIGE SCHALTREGLERSCHALTUNG, SCHALTMODUSTREIBER UND LEUCHTE
CIRCUIT DE RÉGULATEUR DE COMMUTATION INDÉPENDANT DE LA TOPOLOGIE, PILOTE DE MODE DE COMMUTATION ET LUMINAIRE

(43) Date of publication of application: 02.08.2023
(73) Proprietor: Tridonic GmbH & Co KG, 6850 Dornbirn (AT)
(72) Inventor: Saccavini, Lukas, 6850 Dornbirn (AT); Auer, Hans, 6850 Dornbirn (AT); Romano, Fabio, 6850 Dornbirn (AT); Stark, Stefan, 6850 Dornbirn (AT); Kucera, Clemens, 6850 Dornbirn (AT)
(74) Representative: Rupp, Christian

(56) References cited:
- EP-A1- 2 621 247
- EP-A1- 2 830 394
- US-A1- 2010 026 208

## Description

### Technical Field

The present disclosure relates to lighting technology, and in particular to an integrated circuit for switching regulation of switch mode drivers of various driver topologies, and a switch mode driver and a luminaire comprising said integrated circuit.

### Background Art

It is generally known that integrated circuits (ICs), such as ASICS, for switching regulation of switch mode drivers, such as LED drivers, operate in accordance with a state machine. Each state involves at least one action, such as driving a power switch of the driver, and at least one state transition in response to a defined stimulus/event. EP 2 830 394 A1 discloses an IC in accordance with a preamble of independent claim 1.

Such a state machine is usually hardcoded, customized for the underlying driver topology and requires modification if the underlying driver topology changes (e.g., from a flyback converter to a resonant converter). In ASIC designs, the state machine cannot be adapted. In microcontroller designs, a recompilation of executable instructions is required.

Accordingly, there is a need to improve switching regulation of the background art for deployment in various driver topologies.

### Summary

This is achieved by the embodiments as defined by the appended independent claims. Preferred embodiments are set forth in the dependent claims and in the following description and drawings.

A first aspect of the present disclosure relates to an integrated circuit, IC, for switching regulation of switch mode drivers of various driver topologies. The IC comprises a state machine including a finite plurality of states. A quantity of the plurality of states is adaptable to a designated driver topology of the various driver topologies. A behavior of the plurality of states is adaptable to the designated driver topology via respective state registers in terms of: at least one action being executed in the respective state, and at least one transition from the respective state to a subsequent state of the plurality of states according to an associated stimulus.

The IC further comprises a number of peripheral mappings, being adaptable to the designated driver topology via respective peripheral registers in terms of: a mapping of at least one sense pin of the designated driver topology and at least one analog resource of the IC.

The at least one analog resource comprises one or more of: a comparator, a clamper, an analog-to-digital converter, and a digital input.

The at least one action may comprise one or more of: a setting of a switch driver status, a starting of a timer, and a stopping of the timer.

The at least one action may be executable responsive to an entry into the respective state, or an exit from the respective state.

The associated stimulus may comprise one or more of: a timeout of the timer, a level change of the comparator, a level change of an error signal, a level change of a state or synchronization signal, and a level change of a signal of the digital input.

The IC may comprise an application-specific integrated circuit, ASIC.

The switch mode driver may comprise an LED driver.

A second aspect of the present disclosure relates to a switch mode driver, comprising a designated driver topology and an IC of the first aspect for switching regulation of the switch mode driver according to the designated driver topology.

The driver topology may comprise one of: a buck converter, a boost converter, a buck-boost converter, a flyback converter, a resonant converter, and a self-oscillating resonant converter.

The switch mode driver may further comprise a microcontroller, being arranged to adapt the number of peripheral mappings to the driver topology.

The microcontroller may further be arranged to adapt the quantity of the plurality of states of the state machine to the designated driver topology, and to adapt the behavior of the plurality of states of the state machine to the driver topology using the adapted number of peripheral mappings.

The switch mode driver may comprise an LED driver.

A third aspect of the present disclosure relates to a luminaire, comprising a switch mode driver of the second aspect and at least one light-emitting diode, LED, being operable by the switch mode driver.

### Advantageous Effects

According to the present disclosure, switching regulation is improved for deployment in various driver topologies by providing a switching regulator IC, such as an ASIC, with an adaptable state machine. This means that both a quantity of its plurality of states can be adapted to a designated driver topology, such as a flyback, boost or LLC converter, as well as a behavior of the respective state. In other words, the state machine may be customized for the designated driver topology without changing a physical structure of the state machine. The state machine can be configured flexibly via registers.

Based on the adaptable state machine, the IC can control different driver topologies as necessary, is thus future-proof and increases a lifespan of the IC.

Custom integrated circuits for different current sources are no longer needed, such that a large amount of logic can be saved (cost reduction).

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a luminaire in accordance with the present disclosure;
- FIG. 2: illustrates a switch mode driver in accordance with the present disclosure for the luminaire of FIG. 1;
- FIG. 3: illustrates an integrated circuit in accordance with the present disclosure for switching regulation of the switch mode driver of FIG. 2;
- FIG. 4: illustrates a first example of a designated driver topology for the switch mode driver of FIG. 2;
- FIG. 5: illustrates a number of peripheral mappings adapted to the designated driver topology of FIG. 4;
- FIGs. 6 - 9: illustrate per-state settings of the state machine of FIG. 10;
- FIG. 10: illustrates the resulting state machine adapted to the designated driver topology of FIG. 4;
- FIG. 11: illustrates a second example of a designated driver topology for the switch mode driver of FIG. 2;
- FIG. 12: illustrates a number of peripheral mappings adapted to the designated driver topology of FIG. 11;
- FIGs. 13 - 17: illustrate per-state settings of the state machine of FIG. 18; and
- FIG. 18: illustrates the resulting state machine 11 adapted to the designated driver topology of FIG. 11.

### Detailed Descriptions of Drawings

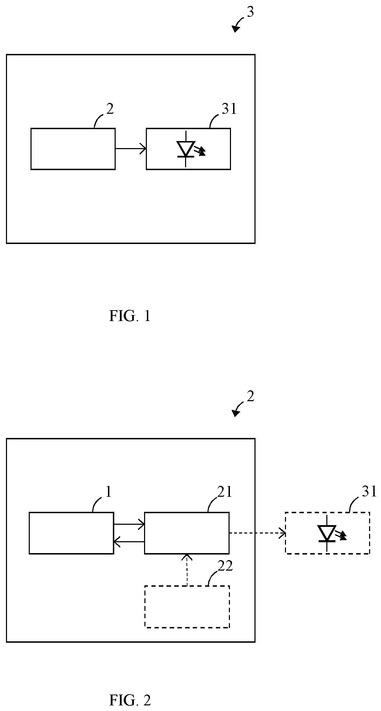

FIG. 1 illustrates a luminaire 3 in accordance with the present disclosure.

The luminaire 3 comprises a switch mode driver 2 of the second aspect (see FIG. 2 below) and at least one light-emitting diode, LED 31, which can be operated / supplied by the switch mode driver 2.

As used herein, a switch mode driver may refer to a switch mode power supply, i.e., an electronic power supply which incorporates a switching regulator to convert electrical power efficiently.

As used herein, a switching regulator may refer to an electronic circuit which uses a switching element, such as a power switch / FET, to transform applied electric power into pulsed electric power, which may subsequently be smoothed using passive and/or reactive elements.

FIG. 2 illustrates a switch mode driver 2 in accordance with the present disclosure for the luminaire of FIG. 1.

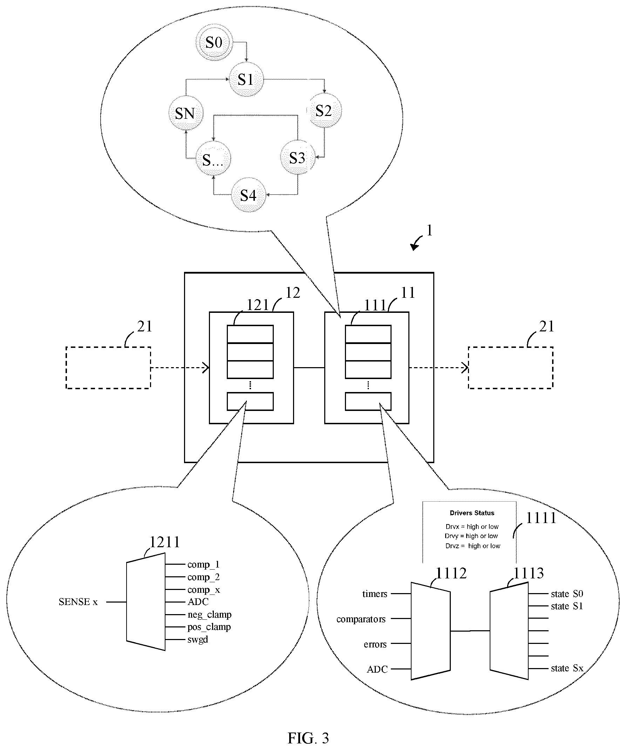

The switch mode driver 2 comprises a designated driver topology 21 and an IC 1 of the first aspect (see FIG. 3 below) for switching regulation of the switch mode driver 2 according to the designated driver topology 21.

In particular, the driver topology 21 may comprise one of: a buck converter, a boost converter, a buck-boost converter, a flyback converter, a resonant converter, and a self-oscillating resonant converter.

As used herein, a driver topology may refer to a particular type of driver / converter.

In accordance with the lighting application described herein, the switch mode driver 2 may comprise an LED driver.

Additionally, the switch mode driver 2 may further comprise a microcontroller 22. Its role will be described in more detail below.

FIG. 3 illustrates an integrated circuit 1 in accordance with the present disclosure for switching regulation of the switch mode driver 2 of FIG. 2.

For descriptive reasons, the driver topology 21 of the switch mode driver 2 is shown on the left (i.e., providing sense signals) as well as on the right (i.e., receiving drive signals) of the IC 1.

In particular, the IC 1 may comprise an application-specific integrated circuit, ASIC.

The IC 1 is designed for switching regulation of switch mode drivers 2 of various driver topologies.

As indicated by a balloon at the top of FIG. 3, the IC 1 comprises a state machine 11 including a finite plurality of states *Sx* to this end.

A quantity of the plurality of states *Sx* is adaptable to a designated driver topology 21 of the various driver topologies. As such, an arbitrary (sub)set of the hardware-wise provided finite plurality of states *Sx* may be used. In particular, the microcontroller 22 mentioned in connection with FIG. 2 may be arranged to adapt the quantity of the plurality of states *Sx* of the state machine 11 to the designated driver topology 21.

As indicated by a balloon at the bottom right of FIG. 3, a behavior of the plurality of states *Sx* is adaptable to the designated driver topology 21 via respective state registers 111 in terms of: at least one action 1111 being executed in the respective state, and at least one transition from the respective state to a subsequent state of the plurality of states *Sx* according to an associated stimulus. In particular, the microcontroller 22 mentioned in connection with FIG. 2 may be arranged adapt the behavior of the plurality of states *Sx* of the state machine 11 to the driver topology 21, partly by using the adapted number of peripheral mappings.

As used herein, a register may refer to on-chip electronic memory for immediate access by a chip logic.

The at least one action 1111 may comprise one or more of: a setting of a switch driver status *DRVx,* a starting of a timer, and a stopping of the timer. In particular, the at least one action 1111 may be executable responsive to an entry into the respective state *Sx,* or an exit from the respective state *Sx.*

A timer as used herein may refer to a counter configured to be set to an initial value, to be decremented in accordance with a given frequency, and to issue a stimulus such as a level change of a digital signal when being counted down to zero (i.e., timed out, lapsing).

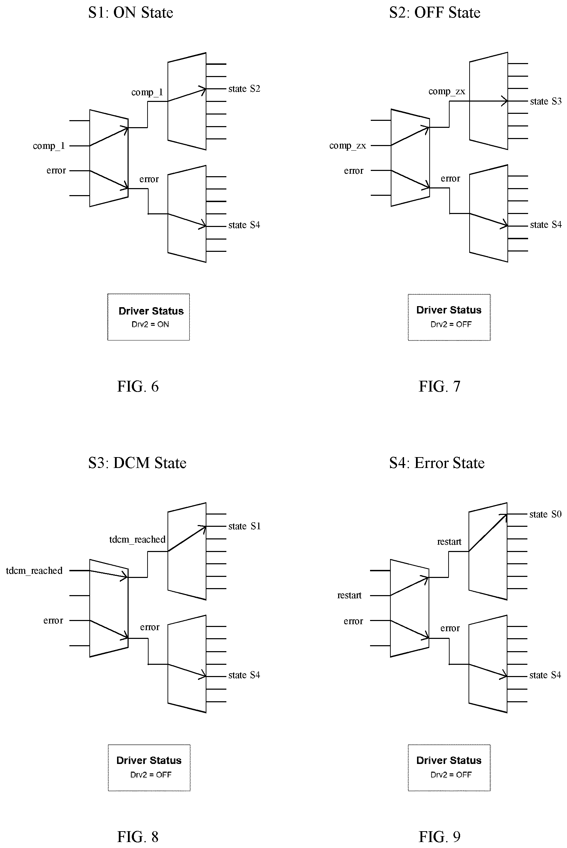

According to the balloon at the bottom right of FIG. 3, the at least one transition according to the associated stimulus may be determined by appropriate configuration of an exit condition multiplexer 1112, which identifies the associated stimulus, in combination with one or more target state demultiplexers 1113, which identify the subsequent state as will be exemplified in connection with FIGs. 6 - 9 and 13 - 17 below, via the corresponding state register 111.

The associated stimulus may comprise one or more of: a timeout of a timer, such as *tdcm_reached==1, tdelay_reached==1,* a level change of a comparator, such as *comp_x==1, comp zx==1,* a level change of an error signal, such as *error==1, restart==1,* a level change of a state / synchronization signal, such as *ctrl update==1, sweep update==1,* and a level change of a signal of a digital input.

As indicated by a balloon at the bottom left of FIG. 3, the IC 1 may further comprise a number of peripheral mappings, being adaptable to the designated driver topology 21. In particular, the microcontroller 22 mentioned in connection with FIG. 2 may be arranged to adapt the number of peripheral mappings to the driver topology 21 via respective peripheral registers 121, in terms of: a mapping of at least one sense pin *SENSE x* of the designated driver topology 21 and at least one analog resource of the IC 1. In other words, the analog resources behind the sense pins can be defined.

The at least one analog resource may comprise one or more of: a comparator (i.e., an electronic device that compares two voltages or currents and outputs a digital signal indicating a result of the comparison) such as *comp_x, comp_zx,* a clamper (i.e., an electronic circuit such as a Z-diode that limits either the positive or the negative peak excursions of a signal to a defined value), such as *neg clamp, pos clamp,* an analog-to-digital converter *ADC* (i.e., a device that converts an analog signal into a digital signal), and the digital input.

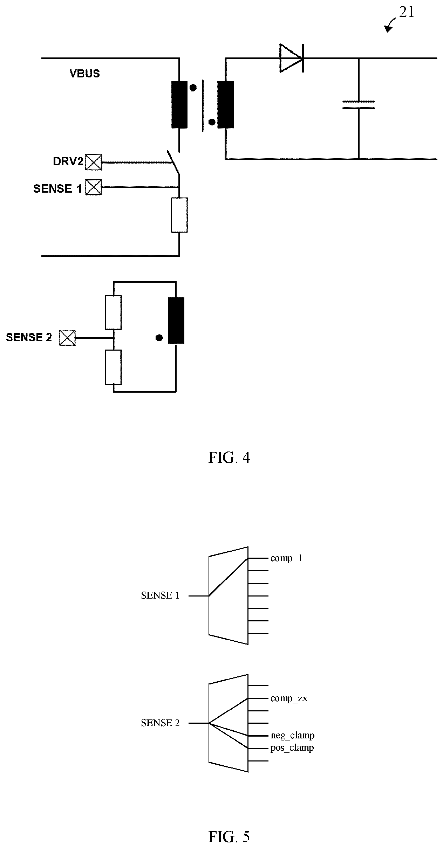

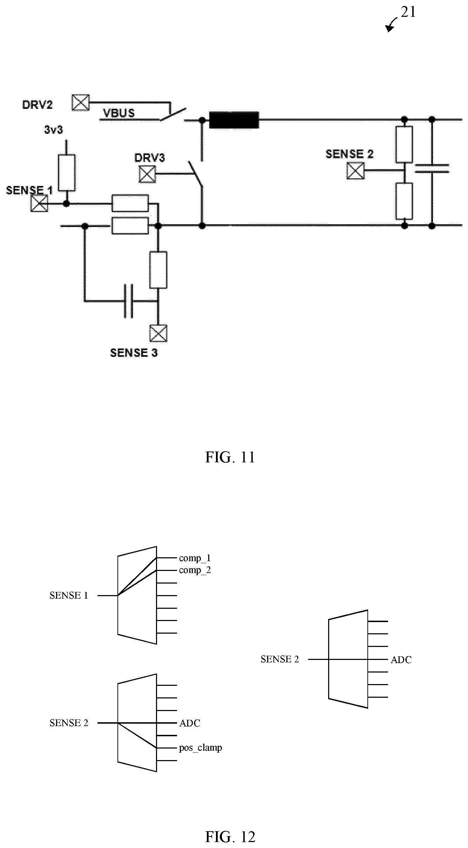

The respective peripheral mapping may be achieved by appropriate configuration of a sense pin peripheral selector 1211 via the corresponding peripheral register 121, as will be exemplified in connection with FIGs. 5 and 12 below.

FIG. 4 illustrates a first example of a designated driver topology 21 for the switch mode driver 2 of FIG. 2.

The designated driver topology 21 corresponds to a flyback converter.

The topology provides two sense pins: The sense pin *SENSE 1* allows for sensing a primary current, from which an average LED current may be calculated based on the timings (t_{ON}, t_{OFF}, t_{DCM}). The sense pin *SENSE 2* allows for detecting a zero crossing of the primary current.

The topology further provides a driver signal *DRV2* for a power transistor/switch.

FIG. 5 illustrates a number of peripheral mappings adapted to the designated driver topology 21 of FIG. 4.

In accordance with the two sense pins of the exemplary flyback topology, two corresponding peripheral mappings may be provided.

The sense pin *SENSE 1* maps to the comparator *comp_1* for threshold comparison of the sensed primary current vs. peak level.

The sense pin *SENSE 2* maps to the comparator *comp_zx* for threshold comparison of the sensed primary current vs. zero level (i.e., zero crossing detection), and to negative clamping *neg_clamp* and positive clamping *pos_clamp.*

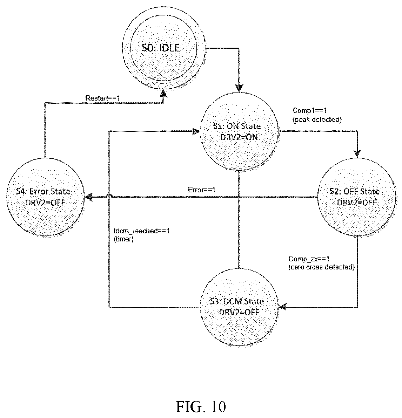

FIGs. 6 - 9 illustrate per-state settings of the state machine 11 of FIG. 10.

FIG. 10 illustrates the resulting state machine 11 adapted to the designated driver topology 21 of FIG. 4.

The ON state S1 (see FIG. 6) involves an action 1111 of setting the switch driver status *DRV2=ON.* In addition, a stimulus by comparator *comp_1* (i.e., *comp_1==1* ⇒ peak detected) triggers a transition to OFF state *S2,* and a stimulus by signal *error* (i.e., *error==1*) triggers a transition to an Error state *S4.*

The OFF state *S2* (see FIG. 7) involves an action 1111 of setting the switch driver status *DRV2=OFF.* In addition, a stimulus by comparator *comp_zx* (i.e., *comp_zx==1* ⇒ zero crossing detected) triggers a transition to DCM state *S3,* and a stimulus by signal *error* (i.e., *error==1)* triggers a transition to the Error state *S4.*

The DCM state *S3* (see FIG. 8) involves an action 1111 of setting the switch driver status *DRV2=OFF.* In addition, a stimulus by timer *tdcm_reached* (i.e., *tdcm reached==1* ⇒ lapse of non-conduction period) triggers a transition to the ON state *S1,* and a stimulus by signal *error* (i.e., *error==1*) triggers a transition to the Error state *S4.*

The Error state *S4* (see FIG. 9) involves an action 1111 of setting the switch driver status *DRV2=OFF.* In addition, a stimulus by signal *restart* (i.e., *restart==1)* triggers a transition to an IDLE state *S0,* whereafter an (unconditional) transition to the ON state *S1* may follow.

FIG. 11 illustrates a second example of a designated driver topology 21 for the switch mode driver 2 of FIG. 2.

The designated driver topology 21 corresponds to a buck converter.

The topology provides three sense pins: The sense pin *SENSE 1* allows for sensing a buck choke current. If a defined maximum peak is reached a high-side (HS) switch will be turned off, and if a defined minimum peak is reached a low-side (LS) switch will be turned off. The sense pin *SENSE 2* allows for sensing an LED voltage. The sense pin *SENSE 3* allows for sensing an average buck current.

The topology further provides driver signals *DRV2* for the HS power transistor/switch and *DRV3* for the LS power transistor/switch.

FIG. 12 illustrates a number of peripheral mappings adapted to the designated driver topology 21 of FIG. 11.

In accordance with the three sense pins of the exemplary buck topology, three corresponding peripheral mappings may be provided.

The sense pin *SENSE 1* maps to the comparator *comp_1* for threshold comparison (vs. the defined maximum peak) of the sensed buck choke current, and to the comparator *comp_2* for threshold comparison (vs. the defined minimum peak) of the sensed buck choke current.

The sense pin *SENSE 2* maps to the analog/digital converter *ADC* for sensing of the LED voltage, and to positive clamping *pos_clamp.*

The sense pin *SENSE 3* maps to the analog/digital converter *ADC* for sensing of the average buck current.

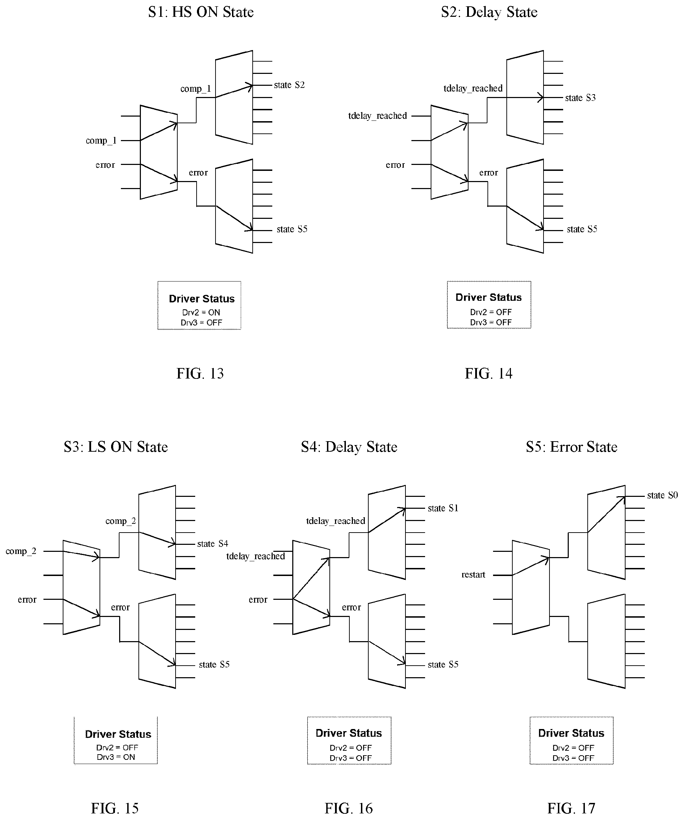

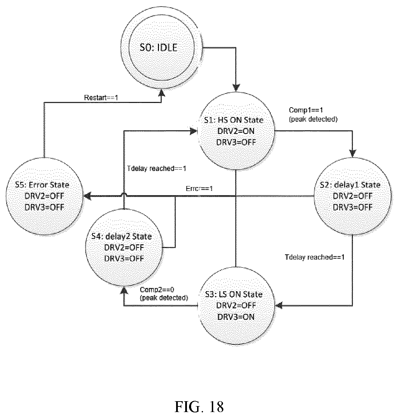

FIGs. 13 - 17 illustrate per-state settings of the state machine 11 of FIG. 18.

FIG. 18 illustrates the resulting state machine 11 adapted to the designated driver topology 21 of FIG. 11.

The HS ON state *S1* (see FIG. 13) involves an action 1111 of setting the switch driver status *DRV2=ON* and *DRV3=OFF.* In addition, a stimulus by comparator *comp_1* (i.e., *comp 1==1* ⇒ maximum peak detected) triggers a transition to Delay1 state *S2,* and a stimulus by signal *error* (i.e., *error==1)* triggers a transition to an Error state *S5.*

The Delay1 state *S2* (see FIG. 14) involves an action 1111 of setting the switch driver status *DRV2=OFF* and *DRV3=OFF.* In addition, a stimulus by timer *tdelay_reached* (i.e., *tdelay_reached* ==*1* ⇒ lapse of delay period) triggers a transition to LS ON state *S3,* and a stimulus by signal *error* (i.e., *error==1)* triggers a transition to the Error state *S5.*

The LS ON state *S3* (see FIG. 15) involves an action 1111 of setting the switch driver status *DRV2=OFF* and *DRV3=ON.*

In addition, a stimulus by comparator *comp_*2 (i.e., *comp_*⇒ minimum peak detected) triggers a transition to the Delay 2 state *S4,* and a stimulus by signal *error* (i.e., *error==1*) triggers a transition to the Error state *S5.*

The Delay2 state *S4* (see FIG. 16) involves an action 1111 of setting the switch driver status *DRV2=OFF* and *DRV3=OFF.* In addition, a stimulus by timer *tdelay_reached* (i.e., *tdelay_reached* ==*1* ⇒ lapse of delay period) triggers a transition to the ON state *S1,* and a stimulus by signal *error* (i.e., *error==1)* triggers a transition to the Error state *S5.*

The Error state *S5* (see FIG. 17) involves an action 1111 of setting the switch driver status *DRV2=OFF* and *DRV3=OFF.* In addition, a stimulus by signal *restart* (i.e., *restart==1*) triggers a transition to an IDLE state *S0,* whereafter an (unconditional) transition to the ON state *S1* may follow.

## Claims

1. An integrated circuit, IC (1), for switching regulation of switch mode drivers (2) of various driver topologies, the IC (1) comprising
a state machine (11) including a finite plurality of states (*Sx*);
a quantity of the plurality of states (*Sx*) being adaptable to a designated driver topology (21) of the various driver topologies; and
a behavior of the plurality of states (*Sx*) being adaptable to the designated driver topology (21) via respective state registers (111) in terms of:
- at least one action (1111) being executed in the respective state, and
- at least one transition from the respective state to a subsequent state of the plurality of states *(Sx)* according to an associated stimulus;
**characterized by** the IC (1) comprising
a number of peripheral mappings, being adaptable to the designated driver topology (21) via respective peripheral registers (121) in terms of:
- a mapping of at least one sense pin *(SENSE x)* of the designated driver topology (21) and at least one analog resource of the IC (1), wherein the at least one analog resource comprises one or more of a comparator *(comp_x, comp_zx),* a clamper *(neg_clamp, pos_clamp),* an analog-to-digital converter *(ADC),* and a digital input.

2. The IC (1) of claim 1,
the at least one action (1111) comprising one or more of:
- a setting of a switch driver status *(DRVx),*
- a starting of a timer, and
- a stopping of the timer.

3. The IC (1) of claim 2,
the at least one action (1111) being executable responsive to
- an entry into the respective state (*Sx*)*,* or
- an exit from the respective state (*Sx*)*.*

4. The IC (1) of any one of the preceding claims,
the associated stimulus comprising one or more of:
- a timeout of the timer *(tdcm_reached==1, tdelay_reached==1),*
- a level change of the comparator *(comp_x==1, comp_zx==1),*
- a level change of an error signal *(error==1, restart==1),*
- a level change of a state or synchronization signal *(ctrl update==1, sweep_update==1),* and
- a level change of a signal of the digital input.

5. The IC (1) of any one of the preceding claims,
the IC (1) comprising an application-specific integrated circuit, ASIC.

6. The IC (1) of any one of the claims preceding claims,
the switch mode driver (2) comprising an LED driver.

7. A switch mode driver (2), comprising
a designated driver topology (21); and
an IC (1) of any one of the preceding claims for switching regulation of the switch mode driver (2) according to the designated driver topology (21).

8. The switch mode driver (2) of claim 7,
the driver topology (21) comprising one of:
- a buck converter,
- a boost converter,
- a buck-boost converter,
- a flyback converter,
- a resonant converter, and
- a self-oscillating resonant converter.

9. The switch mode driver (2) of claim 7 or claim 8, further comprising a microcontroller (22), being arranged
to adapt the number of peripheral mappings to the driver topology (21).

10. The switch mode driver (2) of claim 9, further comprising the microcontroller (22) further being arranged
to adapt the quantity of the plurality of states (*Sx*) of the state machine (11) to the designated driver topology (21); and
to adapt the behavior of the plurality of states (*Sx*) of the state machine (11) to the driver topology (21) using the adapted number of peripheral mappings.

11. The switch mode driver (2) of any one of the claims 7 to 10,
the switch mode driver (2) comprising an LED driver.

12. A luminaire (3), comprising
a switch mode driver (2) of claim 11; and
at least one light-emitting diode, LED (31), being operable by the switch mode driver (2).

## Patentansprüche

1. Integrierte Schaltung, IC (1), für eine Schaltregelung von Schaltreglertreibern (2) verschiedener Treibertopologien, der IC (1) umfassend
eine Zustandsmaschine (11), die eine endliche Vielzahl von Zuständen (Sx) einschließt;
eine Anzahl der Vielzahl von Zuständen (*Sx*), die an eine bestimmte Treibertopologie (21) der verschiedenen Treibertopologien anpassbar ist; und
ein Verhalten der Vielzahl von Zuständen (*Sx*), das an die bestimmte Treibertopologie (21) über jeweilige Zustandsregister (111) anpassbar ist, hinsichtlich:
- mindestens einer Aktion (1111), die in dem jeweiligen Zustand ausgeführt wird, und
- mindestens eines Übergangs von dem jeweiligen Zustand in einen nachfolgenden Zustand der Vielzahl von Zuständen (*Sx*) gemäß einer zugehörigen Anregung;
**gekennzeichnet durch** der IC (1) umfasst
eine Anzahl von Peripheriezuordnungen, die an die bestimmte Treibertopologie (21) über jeweilige Peripherieregister (121) anpassbar sind, hinsichtlich:
- einer Zuordnung von mindestens einem Erfassungs-Pin *(SENSE x)* der bestimmten Treibertopologie (21) und mindestens einer analogen Ressource des IC (1), wobei die mindestens eine analoge Ressource eines oder mehrere von einem Komparator *(Komp_x, Komp_zx),* einer Klemme *(neg_Klemme, pos_Klemme),* einem Analog-Digital-Wandler *(ADC),* und einem digitalen Eingang umfasst.

2. IC (1) nach Anspruch 1,
die mindestens eine Aktion (1111) umfassend eines oder mehrere von:
- einer Einstellung eines Schalttreiberstatus *(DRVx),*
- einem Starten eines Zeitgebers und
- einem Anhalten des Zeitgebers.

3. IC (1) nach Anspruch 2,
wobei die mindestens eine Aktion (1111) ausführbar ist als Reaktion auf
- einen Eintritt in den jeweiligen Zustand (*Sx*), oder
- einen Austritt aus dem jeweiligen Zustand (*Sx*).

4. IC (1) nach einem der vorstehenden Ansprüche,
die zugehörige Anregung umfassend eines oder mehrere von:
- einem Timeout des Zeitgebers *(tdcm_erreicht==1, tVerzögerung_erreicht==1),*
- einer Pegeländerung des Komparators *(Komp_x==1, Komp_zx==1),*
- einer Pegeländerung eines Fehlersignals *(Fehler==1, Neustart==1),*
- einer Pegeländerung eines Zustands- oder Synchronisationssignals *(Strg_Aktualisierung==1, Ablenkung_Aktualisierung==1),* und
- einer Pegeländerung eines Signals des digitalen Eingangs.

5. IC (1) nach einem der vorstehenden Ansprüche,
der IC (1) umfassend eine anwendungsspezifische integrierte Schaltung, ASIC.

6. IC (1) nach einem der vorstehenden Ansprüche,
der Schaltreglertreiber (2) umfassend einen LED-Treiber.

7. Schaltreglertreiber (2), umfassend
eine bestimmte Treibertopologie (21); und
einen IC (1) nach einem der vorstehenden Ansprüche für die Schaltregelung des Schaltreglertreibers (2) gemäß der bestimmten Treibertopologie (21).

8. Schaltreglertreiber (2) nach Anspruch 7,
die Treibertopologie (21) umfassend eines von:
- einem Abwärtswandler,
- einem Aufwärtswandler,
- einem Abwärts-/Aufwärtswandler,
- einem Sperrwandler,
- einem Resonanzkonverter und
- einem selbstschwingenden Resonanzkonverter.

9. Schaltreglertreiber (2) nach Anspruch 7 oder 8, ferner umfassend
einen Mikrocontroller (22), der angeordnet ist
um die Anzahl von Peripheriezuordnungen an die Treibertopologie (21) anzupassen.

10. Schaltreglertreiber (2) nach Anspruch 9, ferner umfassend
wobei der Mikrocontroller (22) ferner angeordnet ist
um die Anzahl der Vielzahl von Zuständen (*Sx*) der Zustandsmaschine (11) an die bestimmte Treibertopologie (21) anzupassen; und
um das Verhalten der Vielzahl von Zuständen (*Sx*) der Zustandsmaschine (11) an die Treibertopologie (21) unter Verwendung der angepassten Anzahl von Peripheriezuordnungen anzupassen.

11. Schaltreglertreiber (2) nach einem der Ansprüche 7 bis 10,
der Schaltreglertreiber (2) umfassend einen LED-Treiber.

12. Leuchte (3), umfassend
einen Schaltreglertreiber (2) nach Anspruch 11; und
mindestens eine Leuchtdiode, LED (31), die durch den Schaltreglertreiber (2) betreibbar ist.

## Revendications

1. Circuit intégré, CI (1), pour la régulation par commutation de circuits d'attaque à mode de commutation (2) parmi diverses topologies de circuits d'attaque, le CI (1) comprenant
une machine à états (11) comportant une pluralité finie d'états (*Sx*) ;
une quantité de la pluralité d'états (*Sx*) pouvant être adaptée à une topologie de circuit d'attaque (21) désignée parmi les diverses topologies de circuits d'attaque ; et
un comportement de la pluralité d'états (*Sx*) pouvant être adapté à la topologie de circuit d'attaque (21) désignée par l'intermédiaire de registres d'état (111) respectifs en termes :
- d'au moins une action (1111) exécutée dans l'état respectif, et
- d'au moins une transition de l'état respectif à un état ultérieur de la pluralité d'états (Sx) selon un stimulus associé ;
**caractérisé par** le CI (1) comprenant
un certain nombre de mappages de périphériques, adaptables à la topologie de circuit d'attaque (21) désignée par l'intermédiaire des registres de périphériques (121) respectifs en termes :
- d'un mappage d'au moins une broche de détection *(SENSE x)* de la topologie de circuit d'attaque (21) désignée et d'au moins une ressource analogique du CI (1), dans lequel l'au moins une ressource analogique comprend un ou plusieurs parmi un comparateur *(comp_x, comp_zx),* un circuit de calage *(neg_clamp, pos_clamp),* un convertisseur analogique-numérique *(CAN)* et une entrée numérique.

2. CI (1) selon la revendication 1,
l'au moins une action (1111) comprenant un ou plusieurs parmi :
- un réglage de l'état d'un circuit d'attaque de commutateur *(DRVx),*
- un démarrage d'une minuterie, et
- un arrêt de la minuterie.

3. CI (1) selon la revendication 2,
l'au moins une action (1111) pouvant être exécutée en réponse à
- une entrée dans l'état respectif (*Sx*), ou
- une sortie de l'état respectif (*Sx*).

4. CI (1) selon l'une quelconque des revendications précédentes,
le stimulus associé comprenant un ou plusieurs parmi :
- un dépassement de délai de la minuterie *(tdcm_reached==1, tdelay_reached==1),*
- un changement de niveau du comparateur *(comp_x==1, comp_zx==1),*
- un changement de niveau d'un signal d'erreur *(erreur==1, redémarrage==1),*
- un changement de niveau d'un signal d'état ou de synchronisation *(ctrl_update==1, sweep_update==1),* et
- un changement de niveau d'un signal de l'entrée numérique.

5. CI (1) selon l'une quelconque des revendications précédentes,
le CI (1) comprenant un circuit intégré développé pour un client, ASIC.

6. CI (1) selon l'une quelconque des revendications précédentes,
le circuit d'attaque à mode de commutation (2) comprenant un circuit d'attaque de DEL.

7. Circuit d'attaque à mode de commutation (2), comprenant
une topologie de circuit d'attaque (21) désignée ; et
un CI (1) selon l'une quelconque des revendications précédentes pour la régulation de la commutation du circuit d'attaque à mode de commutation (2) selon la topologie de circuit d'attaque (21) désignée.

8. Circuit d'attaque à mode de commutation (2) selon la revendication 7,
la topologie de circuit d'attaque (21) comprenant l'un parmi :
- un convertisseur abaisseur,
- un convertisseur élévateur,
- un convertisseur abaisseur-élévateur,
- un convertisseur à transfert indirect,
- un convertisseur résonant, et
- un convertisseur résonant auto-oscillant.

9. Circuit d'attaque à mode de commutation (2) selon la revendication 7 ou la revendication 8, comprenant en outre
un microcontrôleur (22), agencé
pour adapter le nombre de mappages de périphériques à la topologie de circuit d'attaque (21).

10. Circuit d'attaque à mode de commutation (2) selon la revendication 9, comprenant en outre :
le microcontrôleur (22) en outre agencé
pour adapter la quantité de la pluralité d'états *(Sx*) de la machine à états (11) à la topologie de circuit d'attaque (21) désignée ; et
pour adapter le comportement de la pluralité d'états *(Sx*) de la machine à états (11) à la topologie de circuit d'attaque (21) à l'aide du nombre adapté de mappages de périphériques.

11. Circuit d'attaque à mode de commutation (2) selon l'une quelconque des revendications 7 à 10,
le circuit d'attaque à mode de commutation (2) comprenant un circuit d'attaque de DEL.

12. Luminaire (3) comprenant
un circuit d'attaque à mode de commutation (2) selon la revendication 11 ; et
au moins une diode électroluminescente, DEL (31), pouvant être actionnée par le circuit d'attaque à mode de commutation (2).
